# EUROPEAN PATENT SPECIFICATION

(11) **EP 2 051 437 B1**
(45) Date of publication and mention of the grant of the patent: **15.06.2011**
(21) Application number: 08018201.7
(22) Date of filing: 17.10.2008
(51) Int. Cl.: H04L 12/12, H04B 3/54, H04L 12/28

(54) **Power line adapter and method of controlling power line adapter operated in power-saving mode**
Stromleitungsadapter und Verfahren zur Steuerung des Stromleitungsadapters im Stromsparmodus
Adaptateur de ligne d'alimentation et procédé pour contrôler l'adaptateur de ligne d'alimentation fonctionnant en mode d'économie d'énergie

(30) Priority: 18.10.2007 CN 200710166808
(43) Date of publication of application: 22.04.2009
(73) Proprietor: Alpha Networks Inc., Hsinchu (TW)
(72) Inventor: Wu, Hsiu-Wu, Hsinchu (TW); Chiu, Chung-Yi, Hsinchu (TW)
(74) Representative: Winkler, Andreas Fritz Ernst

(56) References cited:
- EP-A- 1 667 339
- EP-A- 1 868 299
- KR-A- 20070 069 241
- KR-A- 20080 056 526

## Description

### FIELD OF THE INVENTION

The present invention relates to a power line adapter, and more particularly to a power line adapter can be operated in a power-saving mode.

### BACKGROUND OF THE INVENTION

In the recent years, the personal computers (PC) and the networks have played essential roles in people's life, and now, we rely on computer networks to retrieve and share information. Today, individual computers can be connected to a power-line network, wherein the power-line network is constructed based on the electrical wires. Unfortunately, the magnitude of voltage in the electrical wires is much higher than the magnitude of voltage in signal itself; furthermore, the magnitude of noise in the electrical wires is also relatively high. However, the above problems can be solved by using the power-line adapter.

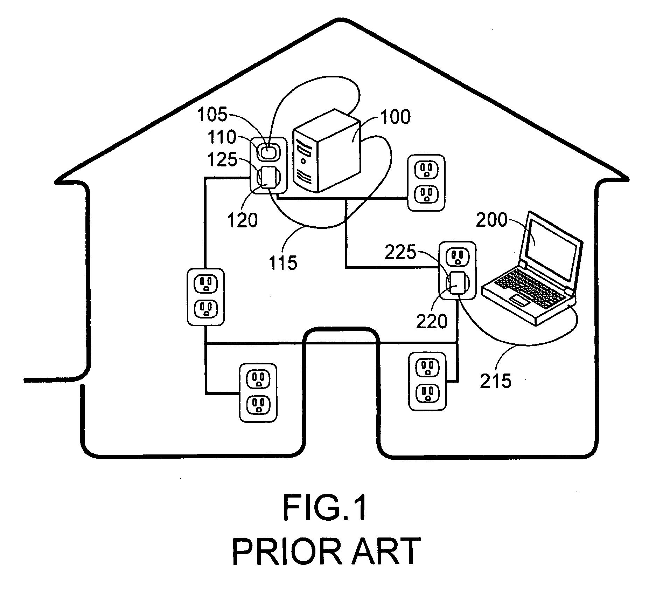

FIG. 1 is a diagram showing a power-line network, which is constructed by the electrical wires and power sockets in a house. Generally, there are a lot of power sockets in each division of a house, and these power sockets are connected in parallel by electrical wires. Today, these power sockets and electrical wires not only serve to supply the AC voltage (for example 120V 60Hz), these power sockets and electrical wires can also be the components of the power-line network in the house. As depicted in FIG. 1, the AC voltage is supplied to the desktop computer 100 when the power plug 105 of the desktop computer 100 is plugged in the first power socket 110. Furthermore, the desktop computer 100 can be connected to the laptop computer 200 by using the electrical wires in the house if the network cable 115 of the desktop computer 100 is plugged in the first power line adapter 120 which is plugged in the second power socket 125, and also the network cable 215 of the laptop computer 200 is plugged in the second power line adapter 220 which is plugged in the third power socket 225.

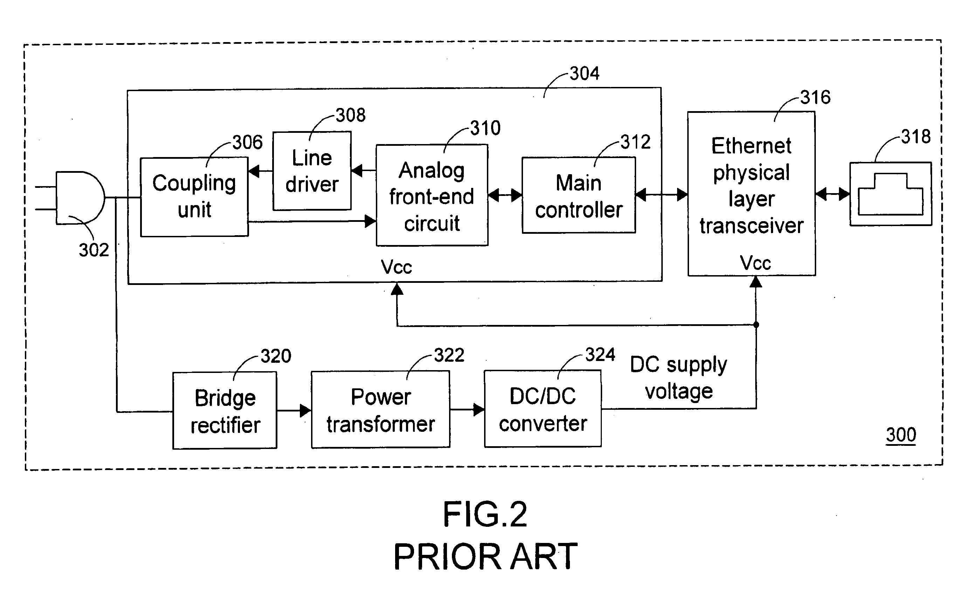

FIG. 2 is a block diagram showing the circuit configuration of a conventional power line adapter. The power line adapter 300 comprises a power plug 302, a power line communication circuit 304, an Ethernet physical layer transceiver 316, a network socket 318, a bridge rectifier 320, a power transformer 322, and a DC/DC converter 324. The power line communication circuit 304 further comprises a coupling unit 306, a line driver 308, an analog front-end circuit 310, and a main controller 312.

In the conventional power line adapter 300, the power plug 302, the power line communication circuit 304, the Ethernet physical layer transceiver 316, and the network socket 318 together function as a data-transmitting module; the power plug 302, the bridge rectifier 320, the power transformer 322, and the DC/DC converter 324 together function as a power-transmitting module which is for providing the DC supply voltage (Vcc) needed by the operations of the power line communication circuit 304 and the Ethernet physical layer transceiver 316. That is, the AC voltage received by the power plug 302 is first converted to a first DC voltage by the bridge rectifier 320; the voltage level of the first DC voltage is further modulated by the power transformer 322; the modulated first DC voltage is further converted to the DC supply voltage (Vcc) by the DC/DC converter 324 and finally outputted to the power line communication circuit 304 and the Ethernet physical layer transceiver 316.

The network socket 318 is for the connection of the network cable (i.e., RJ45, not shown in FIG. 2) of a computer, and data can be derived to or derived from the computer through the Ethernet physical layer transceiver 316. In other words, when the computer is sending data out, the data outputted by the Ethernet physical layer transceiver 316 has to be processed and modulated by the main controller 312, the analog front-end circuit 310, the line driver 308, and the coupling unit 306, and then eventually transmitted to the electrical wires. Alternatively, when the computer is receiving data, the modulated data in the electrical wires is processed and demodulated by the coupling unit 306, the analog front-end circuit 310, and then eventually transmitted to the computer through the Ethernet physical layer transceiver 316.

Generally, the power line adapter is always plugged in the power socket, and accordingly the power is always consuming all the time even no cable connection is built or no data is transmitting between two computers. That is, 80%∼90% power, compared to the power consumed by the power line adapter operating in transmitting data, is waste.

In EP 1 667 339 A1, a Home-Plug adapter is proposed. It includes a HomePlug chip and at least one network interface. A logic module is connected between the HomePlug chip and the network interface. The logic module can detect an Ethernet link signal and generate a control signal to switch off the HomPlug chip depending on the logic state of the link signal.

In KR 1020070069241 A, a power-saving management system for a PLC (Power Line Communication) modem is provided. A signal decision part determines signal existence and nonexistence within a power line connected with the PLC modem. A switch controller delivers an on/off control signal to a switch element according to the determination of the signal decision part to perform a switch on/off operation in order to supply or block power to the power-saving management system.

Although the above-mentioned documents describe power-saving approaches of power-line network, some conditions appropriate for power-saving mode are not taken into consideration. For example, if the computer is linked to the power-line network, but there is no valid data transmitting, the prior arts will not enter the power-saving mode. It still wastes power. Therefore, designing a power line adapter capable of being operated in a power-saving mode when no data is transmitted even when a cable connection is built is the main purpose of the present invention.

### SUMMARY OF THE INVENTION

The object of the present invention is to provide a power line adapter capable of operated in a power-saving mode when no data is transmitted.

The present invention provides a power line adapter, comprising: a power plug, which can be plugged in a power socket, for receiving an AC voltage; a power-transmitting module, connected to the power plug, for converting the AC voltage to a DC supply voltage; a data-transmitting module, connected to the power plug, for transmitting data to the power plug or receiving data from the power plug, wherein the data-transmitting module at least comprises a power line communication circuit and an Ethernet physical layer transceiver; a micro controller, connected to the Ethernet physical layer transceiver, for receiving a link signal and a package signal which are derived from the Ethernet physical layer transceiver, and generating a control signal in response to the link signal or the package signal; and, a switch circuit for receiving the control signal and the DC supply voltage; wherein the switch circuit connects the DC supply voltage to the power line communication circuit when the control signal makes the switch circuit in a close position, and the switch circuit does not connects the DC supply voltage to the power line communication circuit when the control signal makes the switch circuit in an open position.

The present invention provides a method of controlling a power line adapter to be operated in a power-saving mode, wherein the power line adapter includes a power-transmitting module for generating a DC supply voltage and a data-transmitting module for transmitting data, and the data-transmitting module at least includes a power line communication circuit and an Ethernet physical layer transceiver, the method comprising steps of: monitoring a link signal generated by the Ethernet physical layer transceiver when the power line adapter is operated in an active mode; and, disconnecting the DC supply voltage to the power line communication circuit and entering the power-saving mode if the link signal indicates a disconnection over a first time period.

The present invention provides a method of controlling a power line adapter to be operated in a power-saving mode, wherein the power line adapter includes a power-transmitting module for generating a DC supply voltage and a data transmitting-module for transmitting data, and the data-transmitting module at least includes a power line communication circuit and an Ethernet physical layer transceiver, the method comprises steps of: monitoring a link signal and a package signal generated by the Ethernet physical layer transceiver when the power line adapter is operated in an active mode; and disconnecting the DC supply voltage to the power line communication circuit and entering the power-saving mode if the link signal indicates a connection state and the package signal indicates no data being transmitting over a second time period.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a diagram showing a power-line network.

FIG. 2 is a block diagram showing the circuit configuration of a conventional power line adapter.

FIG. 3 is a block diagram showing the circuit configuration of a power line adapter of the present invention.

FIG. 4 is a table showing the power consumption of the power line adapter operated in both the active mode and the power-saving mode.

### DETAILED DESCRIPTION OF THE PREFERRED EMBODIMENT

The main function of the power line adapter is to transmit the data between the electrical wires and the Ethernet, where the Ethernet mainly adopts the 100 Base-T, or the 10 Base-T protocol. The 100/10 Base-T protocol uses the peer-to-peer system for transmitting data, that is, one peer (i.e., desktop computer) is capable of realizing that the opposite peer (i.e., laptop computer) is connected or disconnected through a link signal (Link); furthermore, the data is transmitted between the two peers (desktop computer and laptop computer) or not can be also aware of according to a package signal (Rxdv). The above-mentioned characteristics in the peer-to-peer system are adopted for the implement of the power line adapter having a power-saving mode of the present invention.

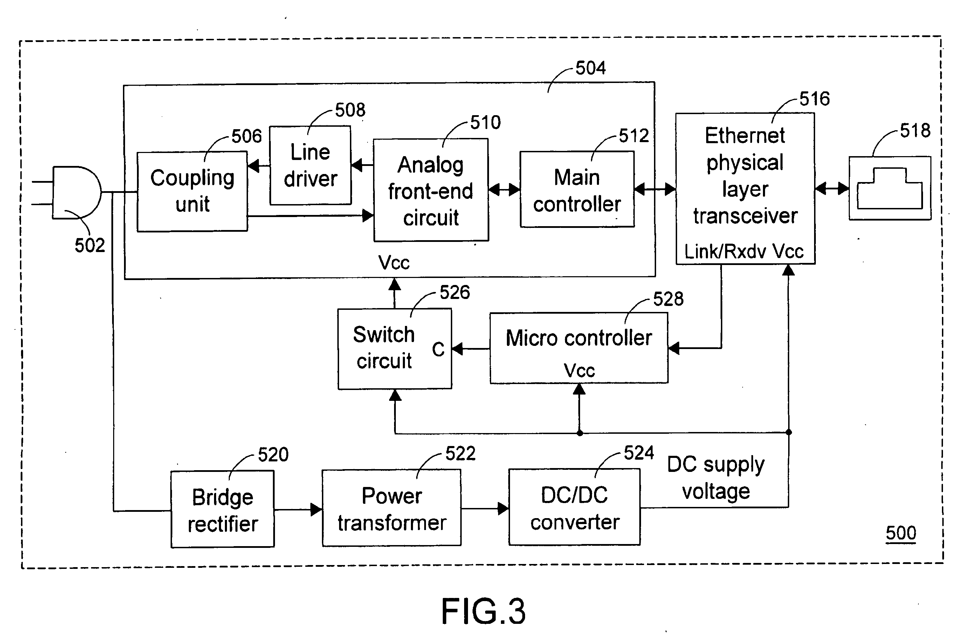

FIG. 3 is a block diagram showing the circuit configuration of a power line adapter of the present invention. The power line adapter 500 comprises: a power plug 502, a power line communication circuit 504, an Ethernet physical layer transceiver 516, a network socket 518, a bridge rectifier 520, a power transformer 522, a DC/DC converter 524, a switch circuit 526, and a micro controller 528. The power line communication circuit 504 further comprises: a coupling unit 506, a line driver 508, an analog front-end circuit 510, and a main controller 512.

In the power line adapter 500, the power plug 502, the power line communication circuit 504, the Ethernet physical layer transceiver 516, and the network socket 518 together function as a data-transmitting module; the power plug 502, the bridge rectifier 520, the power transformer 522, and the DC/DC converter 524 together function as a power-transmitting module which is to provide the DC supply voltage (Vcc) needed by the operation of the power line communication circuit 504, the Ethernet physical layer transceiver 516, and the micro controller 528. Additionally, the micro controller 528 and the switch circuit 526 together serve to provide a DC-controlled current path, and the switch circuit 526 can be implemented by a MOSFET.

In the embodiment of the present invention, the DC supply voltage (Vcc) is always supplied to the Ethernet physical layer transceiver 516 and the micro controller 528 no matter the power line adapter 500 is operated in the active mode or in the power-saving mode. The micro controller 528 serves to generate a control signal (C) to the switch circuit 526 in response to the link signal (Link) or the package signal (Rxdv) that are derived from the Ethernet physical layer transceiver 516. In other words, if the link signal (Link) indicates the connection is established and the package signal (Rxdv) indicates the data is transmitting, then the power line adapter 500 is assumed being operated in the active mode and the control signal (C) will make the switch circuit 526 in close position, accordingly the DC supply voltage (Vcc) is supplied to the coupling unit 506, the line driver 508, the analog front-end circuit 510, and the main controller 512 of the power line communication circuit 504. Alternatively, if the link signal (Link) indicates the connection is not established or the package signal (Rxdv) indicates the data is not transmitting, then the power line adapter 500 is assumed being operated in the power-saving mode and the control signal (C) will make the switch circuit 526 in open position, accordingly the DC supply voltage (Vcc) can not supply to the coupling unit 506, the line driver 508, the analog front-end circuit 510, and the main controller 512 of the power line communication circuit 504.

In the embodiment of the present invention, when the power line adapter 500 is operated in the active mode, the occurrence of the disconnection (or no link) can be detected by the micro controller 528 according to the link signal (Link). That is, the occurrence of the disconnection can be realized by the micro controller 528 if user pulls out cable from the network socket 518 or a computer network socket. If the disconnection has been occurred over a first time period (i.e., 10 seconds), the micro controller 528 makes the switch circuit 526 in open position through the control signal (C). Accordingly the DC supply voltage (Vcc) cannot provide to the power line communication circuit 504, and the power line adapter 500 enters the power-saving mode. When the micro controller 528 realizes the link (or connection) is rebuilt again through the link signal (Link), the micro controller 528 starts to make the switch circuit 526 in close position through the control signal (C). Accordingly the DC supply voltage (Vcc) is provided to the power line communication circuit 504, and the power line adapter 500 enters the active mode again.

In the embodiment of the present invention, the micro controller 528 starts to count time if the link signal (Link) indicates the link (or connection) is established but the package signal (Rxdv) indicates no data is transmitting when the power line adapter is operated in the active mode. If the power line adapter 500 is operated in the active mode but the status of no data transmitting has been occurred over a second time period (i.e., 10 minutes), the micro controller 528 then makes the switch circuit 526 in open position through the control signal (C). Accordingly the DC supply voltage (Vcc) cannot provide to the power line communication circuit 504, and the power line adapter 500 enters the power-saving mode. When the power line adapter 500 is operated in the power-saving mode but the micro controller 528 realizes the data is transmitting again through the package signal (Rxdv), the micro controller 528 then makes the switch circuit 526 in close position through the control signal (C). Accordingly the DC supply voltage (Vcc) is provided to the power line communication circuit 504, and the power line adapter 500 enters the active mode again.

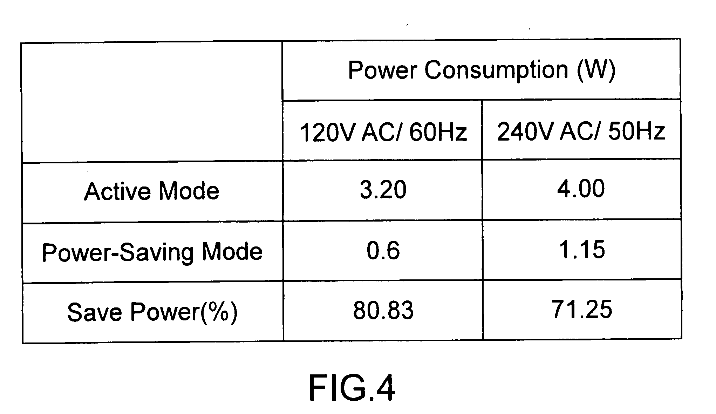

FIG. 4 is a table showing the power consumption of the power line adapter operated in both the active mode and the power-saving mode. The power consumption is 3.2 Watt when the power line adapter 500 is powered by an AC voltage (120V, 60Hz) and operated in the active mode. The power consumption is down to 0.6 Watt when the power line adapter 500 is operated in the power-saving mode. Therefore, 80.83% power will be saved when the power line adapter 500 is operated in the power-saving mode due to the disconnection or no data transmitting. Similarly, the power consumption is 4.0 Watt when the power line adapter 500 is powered by an AC voltage (240V, 50Hz) and operated in the active mode. The power consumption is down to 1.15 Watt when the power line adapter 500 is operated in the power-saving mode. Therefore, 71.25% power will be saved when the power line adapter 500 is operated in the power-saving mode due to the disconnection or no data transmitting.

In the present invention, the switching between the active mode and the power-saving mode is achieved by detecting the link signal (Link) or the package signal (Rxdv) that are derived from the Ethernet physical layer transceiver 516. The power consumption is significantly reduced when the power line adapter of the present invention is operated in the power-saving mode.

The features disclosed in the foregoing description, in the claims and/or in the accompanying drawings may, both separately and in any combination thereof, be material for realizing the invention in diverse forms thereof.

## Claims

1. A power line adapter (500), **characterized in that** the power line adapter (500) comprises:
a power plug (502), which can be plugged in a power socket, for receiving an AC voltage;
a power-transmitting module, connected to the power plug (502), for converting the AC voltage to a DC supply voltage;
a data-transmitting module, connected to the power plug (502), for transmitting data to the power plug (502) or receiving data from the power plug (502), wherein the data-transmitting module at least comprises a power line communication circuit (504) and an Ethernet physical layer transceiver (516);
a micro controller (528), connected to the Ethernet physical layer transceiver (516), for receiving a link signal and a package signal related to valid data transmission derived from the Ethernet physical layer transceiver (516), and generating a control signal in response to the link signal and the package signal; and
a switch circuit (526) for receiving the control signal and the DC supply voltage, and adapted to connect the DC supply voltage to the power line communication circuit (504) if the control signal makes the switch circuit (526) in a close position, and to disconnect the DC supply voltage to the power line communication circuit (504) if the control signal makes the switch circuit (526) in an open position.

2. The power line adapter (500) according to claim 1, **characterized in that** the power-transmitting module further comprises:
a bridge rectifier (520), connected to the power plug (502), for the converting of the AC voltage to a first DC voltage;
a power transformer (522), connected to the bridge rectifier (520), for modulating the first DC voltage derived from the bridge rectifier (520); and
a DC/DC converter (524), connected to the power transformer (522), for converting the modulated first DC voltage to the DC supply voltage needed by the data-transmitting module.

3. The power line adapter (500) according to claim 1, **characterized in that** the data-transmitting module further comprises:
the power line communication circuit (504) connected to the power plug (502);
the Ethernet physical layer transceiver (516) connected to the power line communication circuit (504); and
a network socket (518) connected to the Ethernet physical layer transceiver (516);
wherein a cable can be plugged into the network socket (518) for receiving data from a computer or transmitting data to the computer.

4. The power line adapter (500) according to claim 3, **characterized in that** the network socket (518) is a RJ45 socket.

5. The power line adapter (500) according to claim 3, **characterized in that** the Ethernet physical layer transceiver (518) is adapted to adapt a 100 Base-T or a 10 Base-T protocol.

6. The power line adapter (500) according to claim 1, **characterized in that** the power line communication circuit (504) further comprises:
a coupling unit (506) connected to the power plug (502);
a line driver (508) connected to the coupling unit (506);
an analog front-end circuit (510) connected to the coupling unit (506) and the line driver (508); and
a main controller (512) connected to the analog front-end circuit (510) and the Ethernet physical layer transceiver (516);
wherein the main controller (512), the analog front-end circuit (510), the line driver (508) and the coupling unit (506) in sequence are adapted to process and modulate the data transmitted from a computer to the power plug (502), and the coupling unit (506),
the analog front-end circuit (510) and the main controller (512) in sequence are adapted to process and demodulate the data transmitted from the power plug (502) to the computer through the Ethernet physical layer transceiver (516), a network socket (518) and a cable.

7. A method of controlling a power line adapter (500) to be operated in a power-saving mode, wherein the power line adapter (500) includes a power-transmitting module for generating a DC supply voltage and a data transmitting-module for transmitting data, and the data-transmitting module at least includes a power line communication circuit (504) and an Ethernet physical layer transceiver (516), **characterized in that** the method comprises steps of:
monitoring a link signal and a package signal related to valid data transmission generated by the Ethernet physical layer transceiver (516) when the power line adapter (500) is operated in an active mode; and
disconnecting the DC supply voltage to the power line communication circuit (504) and entering the power-saving mode if the link signal indicates a connection state and the package signal indicates no data being transmitted over a time period.

8. The method according to claim 7, **characterized in that** the time period is 10 seconds.

9. The method according to claim 7, **characterized in that** the method further comprises a step of:
connecting the DC supply voltage to the power line communication circuit (504) and
entering the active mode if a package signal indicates data is being transmitted when the power line adapter (500) is operated in the power-saving mode.

## Patentansprüche

1. Stromleitungsadapter (500), **dadurch gekennzeichnet, dass** der Stromleitungsadapter (500) aufweist:
einen Netzstecker (502), der in eine Netzsteckdose steckbar ist, zum Empfangen einer Wechselspannung;
ein mit dem Netzstecker (502) verbundenes Stromübertragungsmodul zum Umwandeln der Wechselspannung in eine Versorgungsgleichspannung;
ein mit dem Netzstecker (502) verbundenes Datenübertragungsmodul zum Übertragen von Daten an den Netzstecker (502) oder Empfangen von Daten von dem Netzstecker (502), wobei das Datenübertragungsmodul mindestens eine Stromleitungskommunikationsschaltung (504) und einen Ethemet-Physical-Layer-Transceiver (516) aufweist;
einen mit dem Ethemet-Physical-Layer-Transceiver (516) verbundenen Mikrocontroller (528) zum Empfangen eines Verbindungssignals und eines mit gültiger Datenübertragung in Beziehung stehenden Paketsignals, die von dem Ethemet-Physical-Layer-Transceiver (516) abgeleitet sind, und Erzeugen eines Steuersignals als Antwort auf das Verbindungssignal und das Paketsignal; und
einen Schaltkreis (526) zum Empfangen des Steuersignals und der Versorgungsgleichspannung und zum Verbinden der Versorgungsgleichspannung mit der Stromleitungskommunikationsschaltung (504), wenn das Steuersignal den Schaltkreis (526) in eine geschlossene Position bringt, und zum Trennen der Versorgungsgleichspannung von der Stromleitungskommunikationsschaltung (504), wenn das Steuersignal den Schaltkreis (526) in eine offene Position bringt.

2. Stromleitungsadapter (500) nach Anspruch 1, **dadurch gekennzeichnet, dass** das Stromübertragungsmodul ferner aufweist:
einen mit dem Netzstecker (502) verbundenen Brückengleichrichter (520) zum Umwandeln der Wechselspannung in eine erste Gleichspannung;
einen mit dem Brückengleichrichter (520) verbundenen Transformator (522) zum Modulieren der von dem Brückengleichrichter (520) abgeleiteten ersten Gleichspannung; und
einen mit dem Transformator (522) verbundenen DC/DC-Wandler (524) zum Umwandeln der modulierten ersten Gleichspannung in die von dem Datenübertragungsmodul benötigte Versorgungsgleichspannung.

3. Stromleitungsadapter (500) nach Anspruch 2, **dadurch gekennzeichnet, dass** das Datenübertragungsmodul ferner aufweist:
die mit dem Netzstecker (502) verbundene Stromleitungskommunikationsschaltung (504);
den mit der Stromleitungskommunikationsschaltung (504) verbundenen Ethemet-Physical-Layer-Transceiver (516); und
eine mit dem Ethernet-Physical-Layer-Transceiver (516) verbundene Netzwerkdose (518);
wobei ein Kabel in die Netzwerkdose (518) zum Empfangen von Daten von einem Computer oder Senden von Daten an den Computer steckbar ist.

4. Stromleitungsadapter (500) nach Anspruch 3, **dadurch gekennzeichnet, dass** die Netzwerkdose (518) eine RJ45-Dose ist.

5. Stromleitungsadapter (500) nach Anspruch 3, **dadurch gekennzeichnet, dass** der Ethemet-Physical-Layer-Transceiver (518) gestaltet ist, um ein 100 Base-T- oder ein 10 Base-T-Protokoll einzurichten.

6. Stromleitungsadapter (500) nach Anspruch 1, **dadurch gekennzeichnet, dass** die Stromleitungskommunikationsschaltung (504) ferner aufweist:
eine mit dem Netzstecker (502) verbundene Kopplungseinheit (506);
einen mit der Kopplungseinheit (506) verbundenen Leitungstreiber (508);
eine mit der Kopplungseinheit (506) und dem Leitungstreiber (508) verbundene analoge Eingangsschaltung (510); und
eine mit der analogen Eingangsschaltung (510) und dem Ethemet-Physical-Layer-Transceiver (516) verbundene Hauptsteuerung (512);
wobei die Hauptsteuerung (512), die analoge Eingangsschaltung (510), der Leitungstreiber (508) und die Kopplungseinheit (506) in Abfolge gestaltet sind, um die von einem Computer an den Netzstecker (502) übertragenen Daten zu verarbeiten und zu modulieren, und die Kopplungseinheit (506), die analoge Eingangsschaltung (510) und die Hauptsteuerung (512) in Abfolge gestaltet sind, um die von dem Netzstecker (502) an den Computer durch den Ethemet-Physical-Layer-Transceiver (516), eine Netzwerkdose (518) und ein Kabel übertragenen Daten zu verarbeiten und zu modulieren.

7. Verfahren zur Steuerung eines Stromleitungsadapters (500) in einem Stromsparmodus, wobei der Stromleitungsadapter (500) ein Stromübertragungsmodus zum Erzeugen einer Versorgungsgleichspannung und ein Datenübertragungsmodul zum Übertragen von Daten enthält und das Datenübertragungsmodul mindestens eine Stromleitungskommunikationsschaltung (504) und einen Ethemet-Physical-Layer-Transceiver (516) enthält, **dadurch gekennzeichnet, dass** das Verfahren die Schritte aufweist:
Überwachen eines Verbindungssignals und eines mit gültiger Datenübertragung in Beziehung stehenden Paketsignals, die von dem Ethernet-Physical-Layer-Transceiver (516) erzeugt werden, wenn der Stromleitungsadapter (500) in einem aktiven Modus betrieben wird;
Trennen der Versorgungsgleichspannung von der Stromleitungskommunikationsschaltung (504) und Wechsel in den Stromsparmodus, wenn das Verbindungssignal einen Verbindungszustand anzeigt und das Paketsignal anzeigt, dass über eine Zeitdauer keine Daten übertragen werden.

8. Verfahren nach Anspruch 7, **dadurch gekennzeichnet, dass** die Zeitdauer 10 Sekunden beträgt.

9. Verfahren nach Anspruch 7, **dadurch gekennzeichnet, dass** das Verfahren ferner den Schritt aufweist:
Verbinden der Versorgungsgleichspannung mit der Stromleitungskommunikationsschaltung (504) und Wechsel in den aktiven Modus, wenn ein Paketsignal anzeigt, dass Daten übertragen werden, wenn der Stromleitungsadapter (500) in dem Stromsparmodus betrieben wird.

## Revendications

1. Adaptateur réseau sur courants porteurs (500), **caractérisé en ce que** l'adaptateur réseau sur courants porteurs (500) comprend :
une fiche électrique (502), qui peut être branchée dans une prise de courant, pour recevoir une tension alternative ;
un module de transmission de puissance, relié à la fiche électrique (502), pour convertir la tension alternative en une tension d'alimentation continue ;
un module de transmission de données, relié à la fiche électrique (502), pour transmettre des données à la fiche électrique (502) ou recevoir des données à partir de la fiche électrique (502), où le module de transmission de données comprend au moins un circuit de courants porteurs en ligne (504) et un émetteur-récepteur de couche physique Ethernet (516) ;
un microcontrôleur (528), relié à l'émetteur-récepteur de couche physique Ethernet (516), pour recevoir un signal de liaison et un signal en paquet lié pour valider la transmission des données provenant de l'émetteur-récepteur de couche physique Ethernet (516), et générer un signal de commande en réponse au signal de liaison et au signal en paquet ;
un circuit de commutation (526) destiné à recevoir le signal de commande et la tension d'alimentation continue, et adapté pour relier la tension d'alimentation continue au circuit de courants porteurs en ligne (504) si le signal de commande met le circuit de commutation (526) en position étroite, et pour déconnecter la tension d'alimentation continue du circuit de courants porteurs en ligne (504) si le signal de commande met le circuit de commutation (526) en position ouverte.

2. Adaptateur réseau sur courants porteurs (500) selon la revendication 1, **caractérisé en ce que** le module de transmission de puissance comprend en outre :
un redresseur en pont (520), relié à la fiche électrique (502), pour la conversion de la tension alternative en une première tension continue ;
un transformateur de puissance (522), relié au redresseur en pont (520), pour moduler la première tension continue provenant du redresseur en pont (520) ; et
un convertisseur continu/continu (524), relié au transformateur de puissance (522), pour convertir la première tension continue modulée en tension d'alimentation continue nécessaire pour le module de transmission de données.

3. Adaptateur réseau sur courants porteurs (500) selon la revendication 1, **caractérisé en ce que** le module de transmission de données comprend en outre :
le circuit de courants porteurs en ligne (504) relié à la fiche électrique (502) ;
l'émetteur-récepteur de couche physique Ethernet (516) relié au circuit de courants porteurs en ligne (504) ; et
une prise réseau (518) reliée à l'émetteur-récepteur de couche physique Ethernet (516) ;
où un câble électrique peut être branché dans la prise réseau (518) pour recevoir des données à partir d'un ordinateur ou transmettre des données à l'ordinateur.

4. Adaptateur réseau sur courants porteurs (500) selon la revendication 3, **caractérisé en ce que** la prise réseau (518) est une prise RJ45.

5. Adaptateur réseau sur courants porteurs (500) selon la revendication 3, **caractérisé en ce que** l'émetteur-récepteur de couche physique Ethernet (518) est adapté pour utiliser un protocole 100 Base-T ou un protocole 10 Base-T.

6. Adaptateur réseau sur courants porteurs (500) selon la revendication 1, **caractérisé en ce que** le circuit de courants porteurs en ligne (504) comprend en outre :
une unité de couplage au courant porteur(506) reliée à la fiche électrique (502) ;
un module de commande en ligne (508) relié à l'unité de couplage au courant porteur (506) ;
un circuit frontal analogique (510) relié à l'unité de couplage au courant porteur (506) et au module de commande en ligne (508) ; et
une unité de commande principale (512) reliée au circuit frontal analogique (510) et à l'émetteur-récepteur de couche physique Ethernet (516) ;
où l'unité de commande principale (512), le circuit frontal analogique (510), et le module de commande en ligne (508) et l'unité de couplage au courant porteur (506) dans l'ordre sont adaptés pour traiter et moduler les données transmises à partir d'un ordinateur à la fiche électrique (502), et l'unité de couplage au courant porteur (506), le circuit frontal analogique (510) et l'unité de commande principale (512) dans l'ordre sont adaptés pour traiter et démoduler les données transmises de la fiche électrique (502) à l'ordinateur à travers l'émetteur-récepteur de couche physique Ethernet (516), une prise réseau (518) et un câble électrique.

7. Procédé de commande d'un adaptateur réseau sur courants porteurs (500) devant être exploité dans un mode d'économie d'énergie, où l'adaptateur réseau sur courants porteurs (500) comporte un module de transmission de puissance pour générer une tension d'alimentation continue et un module de transmission de données pour transmettre des données, et le module de transmission de données comporte au moins un circuit de courants porteurs en ligne (504)et un émetteur-récepteur de couche physique Ethernet (516), **caractérisé en ce que** le procédé comporte les étapes qui consistent :
à contrôler un signal de liaison et un signal en paquet lié pour valider la transmission des données générés par l'émetteur-récepteur de couche physique Ethernet (516) lorsque l'adaptateur réseau sur courants porteurs (500) est utilisé dans un mode actif ; et
à déconnecter la tension d'alimentation continue du circuit de courants porteurs en ligne (504) et à débuter le mode d'économie d'énergie si le signal de liaison indique un état de connexion et le signal en paquet indique l'absence de données transmises pendant une durée.

8. Procédé selon la revendication 7, **caractérisé en ce que** la durée est de 10 secondes.

9. Procédé selon la revendication 7, **caractérisé en ce que** le procédé comprend en outre une étape qui consiste:
à relier la tension d'alimentation continue au circuit de courants porteurs en ligne (504) et à débuter le mode actif si un signal en paquet indique que des données sont transmises lorsque l'adaptateur réseau sur courants porteurs (500) est utilisé dans le mode d'économie d'énergie.
